# EUROPEAN PATENT SPECIFICATION

(11) **EP 4 573 364 B1**
(45) Date of publication and mention of the grant of the patent: **18.11.2026**
(21) Application number: 23768979.9
(22) Date of filing: 16.08.2023
(51) Int. Cl.: G01N 30/88, G01N 30/74

(54) **SYSTEM AND METHOD FOR MONITORING OF CHARGE VARIANTS OF MONOCLONAL ANTIBODIES USING RAMAN SPECTROSCOPY**
SYSTEM UND VERFAHREN ZUR ÜBERWACHUNG VON LADUNGSVARIANTEN MONOKLONALER ANTIKÖRPER UNTER VERWENDUNG VON RAMAN-SPEKTROSKOPIE
SYSTÈME ET PROCÉDÉ DE SURVEILLANCE DE VARIANTS DE CHARGE D'ANTICORPS MONOCLONAUX PAR SPECTROSCOPIE RAMAN

(30) Priority: 19.08.2022 IN 202211047354
(43) Date of publication of application: 25.06.2025
(73) Proprietor: Indian Institute of Technology, Delhi, New Delhi 110016 (IN); Cytiva US LLC, Marlborough, MA 01752 (US)
(72) Inventor: RATHORE, Anurag S., New Delhi 110016 (IN); NITIKA, Nitika, New Delhi 110016 (IN); THAKUR, Garima, New Delhi 110016 (IN)
(74) Representative: Démoulin, Eva Lotta
(86) International application number: PCT/US2023/030380
(87) International publication number: WO 2024/039739

(56) References cited:
- CHEN ZHI ET AL: "Bridging size and charge variants of a therapeutic monoclonal antibody by two-dimensional liquid chromatography", JOURNAL OF PHARMACEUTICAL AND BIOMEDICAL ANALYSIS, ELSEVIER B.V, AMSTERDAM, NL, vol. 183, 14 February 2020 (2020-02-14), XP086092328, ISSN: 0731-7085, [retrieved on 20200214], DOI: 10.1016/J.JPBA.2020.113178
- ISABEL VANDENHEEDE ET AL: "Characterize mAb Charge Variants by Cation-Exchange Chromatography Authors Application Note", 1 January 2014 (2014-01-01), XP055366627, Retrieved from the Internet <URL:http://www.richrom.com/application/v2/public/upload/0/default/230.pdf> [retrieved on 20170424]

## Description

### CROSS-REFERENCE TO RELATED APPLICATIONS

This patent application claims the benefit of Indian Patent Application No. 202211047354, filed August 19, 2022.

### BACKGROUND OF THE INVENTION

Charge variants are considered one of the critical quality attributes (CQA) for monoclonal antibodies (mAbs) as they can significantly impact the safety and efficacy of the final drug product, and hence must be tightly controlled. Charge variants can be broadly divided into acidic and basic forms. Acidic variants arise due to modifications including deamidation, high mannose content, glycation, fragmentation, disulphide structural heterogeneity, sialyation, etc., as these modifications lower the isoelectric point of the mAb. Similarly, basic variants arise due to C-terminal lysine truncation, amidation, glycosylation, N-terminal glutamine or glutamic acid incomplete cyclization, methionine oxidation, succinate formation, incomplete removal of leader sequence, or aggregate formation, as these increase the isoelectric point. These charge variants may affect protein stability and alter function and immunogenicity of the final product and may result in different protein interactions. Most commercial mAb processes require further clearance of charge variants in the downstream process using cation exchange chromatography (CEX) to achieve the final quality target product profile (QTPP). At-line HPLC has been reported as an option for monitoring and control of charge variants.

"Bridging size and charge variants of a therapeutic monoclonal antibody by two-dimensional liquid chromatography" (CHEN ZHI ET AL., JOURNAL OF PHARMACEUTICAL AND BIOMEDICAL ANALYSIS, ELSEVIER B.V, AMSTERDAM, NL, vol. 183, 14 February 2020) discloses a method for determining charge variants in monoclonal antibodies.

There is a need for improved determination of charge variants in manufacturing monoclonal antibodies.

The present invention provides for ameliorating at least some of the disadvantages of the prior art. These and other advantages of the present invention will be apparent from the description as set forth below.

### BRIEF SUMMARY OF THE INVENTION

The present invention is defined in the appended claims. The present invention provides a method for determining charge variants in monoclonal antibodies, the method comprising (a) continuously passing a monoclonal antibody-containing fluid through a chromatography column, including sampling the monoclonal antibody-containing fluid before passing the monoclonal antibody-containing fluid through the chromatography column, and binding monoclonal antibodies in the monoclonal antibody-containing fluid to the chromatography column; (b) eluting bound monoclonal antibodies from the chromatography column to provide eluted monoclonal antibody-containing fluid, and sampling the eluted monoclonal antibody-containing fluid; (c) analyzing, via raman spectroscopy, samples of monoclonal antibody-containing fluid before passing the monoclonal antibody-containing fluid through the chromatography column, and samples of the eluted monoclonal antibody-containing fluid; and, (d) quantifying charge variant distribution present in the sampled monoclonal antibody-containing fluid before passing the monoclonal antibody-containing fluid through the chromatography column.

### BRIEF DESCRIPTION OF THE SEVERAL VIEWS OF THE DRAWING(S)

Figure 1 is a drawing showing analytical Cation Exchange Chromatography (CEX) of monoclonal antibodies prior to charge separation showing the presence of different charge variants (acidic species, main species, and basic species), wherein acidic species elute first, followed by main species in tum followed by basic species, according to an aspect of the invention.
Figures 2A-2B are drawings showing elution profiles of preparative scale CEX monoclonal antibodies, showing significant co-elution between the acidic-main species (Figure 2A) and the main-basic species (Figure 2B), but limited co-elution between the acidic-basic species according to another aspect of the invention.
Figures 3A-3B are drawings showing Raman spectra of monoclonal antibody mixtures before pre-processing (Figure 3A) and after pre-processing (Figure 3B), with samples having high acidic, high main, and high basic content according to an aspect of the invention.
Figures 4A-4D are drawings illustrating scatter plots of observed versus predicted for the proposed CNN architecture: (A) Acidic charge variant; (B) Main charge variant; (C) Basic charge variant; and (D) Total Protein.
Figures 5A-5D are drawings illustrating taylor diagrams of predicted charge variant concentration during the validation stage (A) Acidic charge variant; (B) Main charge variant; (C) Basic charge variant; and (D) Total Protein (full charge variant).
Figures 6A-6D are drawings illustrating comparisons of the actual and predicted charge variant concentration with different machine learning models (A) Acidic charge variant; (B) Main charge variant; (C) Basic charge variant; and (D) Total Protein.
Figure 7A-7B are drawings illustrating schematic designs of integration of Raman spectroscopy in continuous processing (A) post protein A elution; (B) post CEX elution.
Figure 8 is a drawing illustrating a comparison of Raman quantification and HPLC determination of charge variant concentration in different preparative CEX elution fractions.

### DETAILED DESCRIPTION OF THE INVENTION

In accordance with an aspect of the invention, a method for determining charge variants in monoclonal antibodies is provided, the method comprising (a) continuously passing a monoclonal antibody-containing fluid through a chromatography column, including sampling the monoclonal antibody-containing fluid before passing the monoclonal antibody-containing fluid through the chromatography column, and binding monoclonal antibodies in the monoclonal antibody-containing fluid to the chromatography column; (b) eluting bound monoclonal antibodies from the chromatography column to provide eluted monoclonal antibody-containing fluid, and sampling the eluted monoclonal antibody-containing fluid; (c) analyzing, via raman spectroscopy, samples of monoclonal antibody-containing fluid before passing the monoclonal antibody-containing fluid through the chromatography column, and samples of the eluted monoclonal antibody-containing fluid; and, (d) quantifying charge variant distribution present in the sampled monoclonal antibody-containing fluid before passing the monoclonal antibody-containing fluid through the chromatography column.

In an aspect, the method includes adjusting an elution rate of the monoclonal antibodies from the chromatography column based on the charge variant distribution quantified in (d).

In some aspects of the method, (d) includes quantifying charge variant distribution present in the sampled eluted monoclonal antibody-containing fluid.

Aspects of the method can be utilized with in-line and at-line sampling of monoclonal antibodies.

Advantageously, Raman spectroscopy can be used for real-time quantification of charge variants in polishing chromatography, as well as a real-time process analytical technology (PAT) tool for control of pooling decisions regarding critical quality attributes (CQAs) of monoclonal antibodies (mAbs) in the downstream train for continuous production. In contrast, an analog conventional device for charge variant determination is High Performance Liquid Chromatography (HPLC). However, HPLC methods typically require 5-30 minutes of analysis time, and this becomes a challenge when the manufacturer is attempting to implement real time controls of CQA in continuous processing.

Raman spectroscopy, unlike infrared spectroscopy, has minimal interference from water absorption bands, which often mask spectroscopic signals of component molecules in aqueous solutions, a common problem in deploying spectroscopic approaches in biopharmaceutical manufacturing compared to solid-state pharmaceutical processes. Raman spectroscopy can be used in both low- and high- concentration aqueous solutions and is able to capture unique vibrations from different bonds to provide a molecular fingerprint of different molecules in the aqueous mixture. It is a fast, non-invasive, and non-destructive technique which makes it suitable as a PAT tool.

Pre-processed Raman spectra can include baseline subtraction, cosmic ray removal, smoothening, and normalization.

In accordance with aspects of the invention, various artificial intelligence (AI) based models were made to determine acidic, main, basic and total protein concentration with correlation coefficients of greater than 0.9 in each case, e.g., 0.94, 0.99, 0.96, and 0.99 respectively. Raman spectroscopy can deliver rapid and accurate determination of charge variant percentage, thereby enabling its use for real time decision making about pooling strategies for a mAb product and thereby achieving consistent charge variant profile of the resulting product. In accordance with aspects of the invention, Raman spectroscopy can be used for charge variant detection in liquid as well as lyophilised forms.

In some aspects, lasers with 500-800 nm wavelength can be used for spectra acquisition with spectral range including, but not limited to, 100-2000 cm⁻¹. If desired, Raman spectroscopy with exposure time 10 seconds or more and power with 30mW or more can be used for fast and accurate charge variant determination of monoclonal antibodies.

Each of the components of the invention will now be described in more detail below, wherein like components have like reference numbers.

### 1. Raman Spectroscopy

### 1.1 Selection of spectral acquisition settings

Raman spectra were collected using inViaTM confocal Raman microscope, Renishaw^{®} with 785 nm laser delivering 300mW power. Wire software (Renishaw^{®}) was used to control the instrument and capture spectra. Samples were collected in 96 well plate and spectra were taken in the range of 300-1800 cm-1 using 50X long distance objective (Leica microsystems^{®}), 200-second exposure time, and 300mW power. These parameters were experimentally adjusted in the range of 10-300 seconds exposure time and 50-1000 mW power to determine optimal conditions for capturing the spectral features of the mAb samples. Before exporting the spectra for model development, baseline subtraction, and height- and width-based cosmic ray removal was done using inbuilt features in the Wire software.

### 1.2 Data preprocessing

Data preprocessing can be useful in creating and training machine learning models. In order to assure robustness, the raw data are transferred into a format that can be understandable by a machine learning model. Herein, the preprocessing techniques utilized three distinct preprocessing techniques: data smoothing, scaling, and data augmentation. The raw spectrum that was recorded had a certain level of noise that was desirably eliminated before further analysis. The Savitzky-Golay filter is a well-known approach that is used for smoothening the signal. This method relies on solving the linear least squares problem for a subset of the data points in an attempt to locally fit a low-degree polynomial of a specified segment width and polynomial order. The following set of parameters yielded the best results for this application: polynomial order=1 and frame length=19. The dynamic range of the spectral data is quite high and is desirably reduced for numerical stability. The spectrum preprocessed by the standard pipeline was used for further processing. In the context of deep learning, the synthetic training dataset was generated from the original dataset. This data augmentation often includes introducing random noise to the training dataset, rotating, scaling and other transformations, while preserving meaningful information. This helps the model gain insight into details and improves its ability to handle noisy input. In order to improve the generation of new training samples, Gaussian noise is added to the existing sample, without significantly altering the structure of the spectrum. In accordance with aspects of the invention, performance data augmentation is only applied on the training set, as applying it to the whole dataset prior to the cross-validation spilt can result in information leakage into the test set.

### 1.3 Development of the Artificial Intelligence-Machine Learning (AI-ML) framework

In accordance with aspects of the invention, a first consideration was designing a calibration library for quantification of charge variants in the mAb samples. A set of samples for model calibration library were designed. The objective was to design a sample set that independently covered variations in the acidic, main, and basic species across the expected chromatography elution space. The range of the model was 0-20 g/L mAb with charge variant concentrations from 0-100%. Calibration models were fitted using a total of 270 library standards that were prepared with 10% spectra randomly selected for internal validation, as discussed further below.

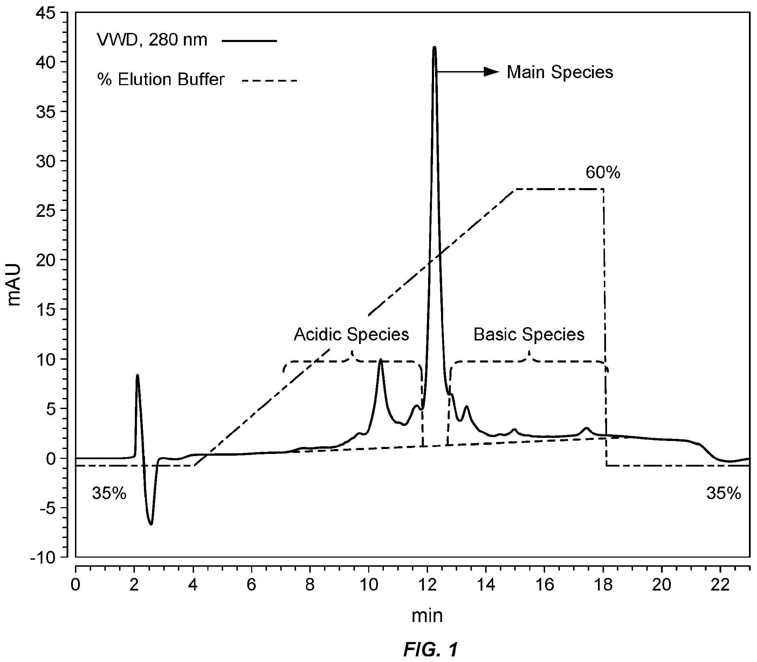

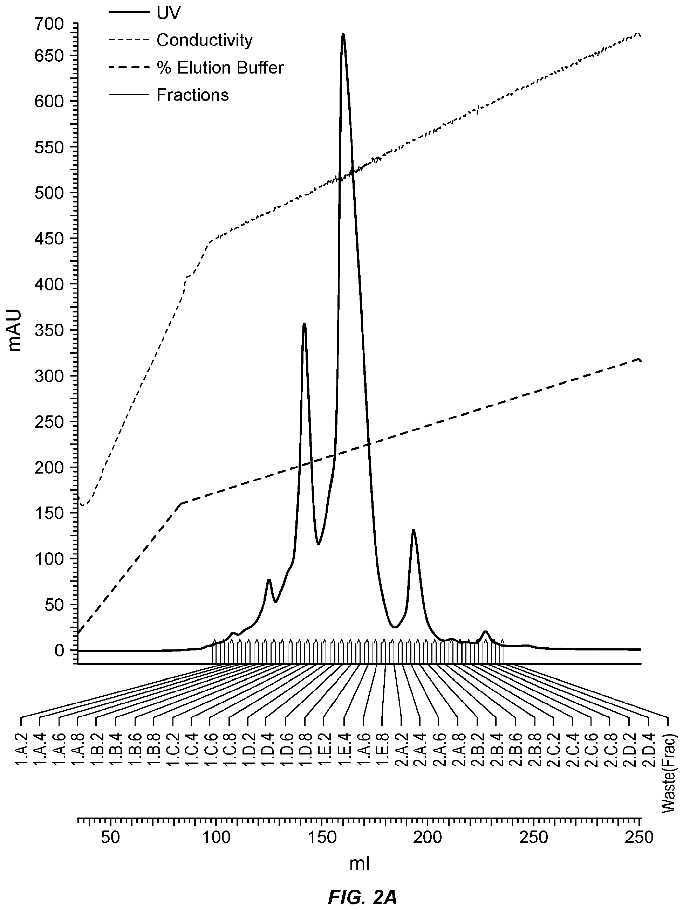

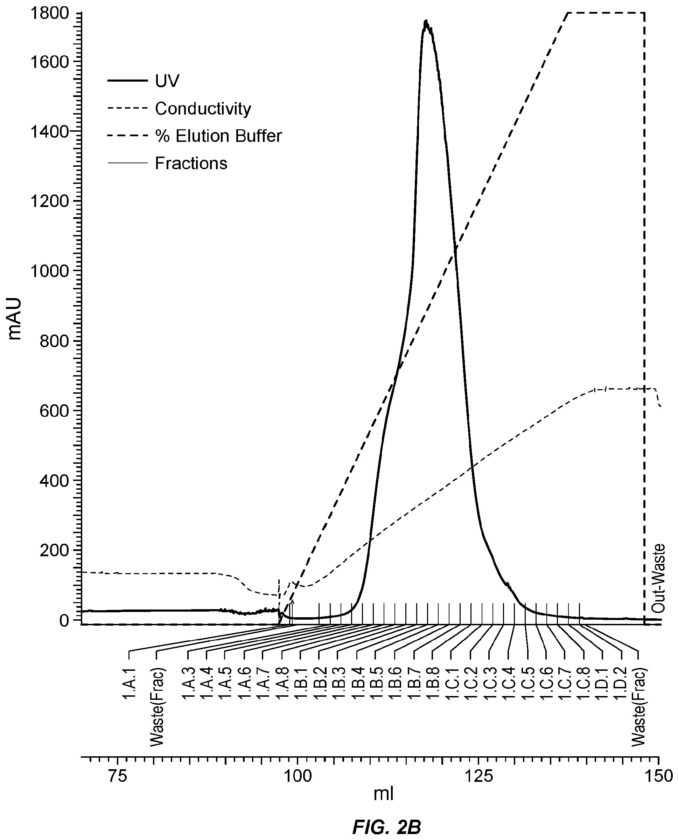

To determine charge variant content of mAb, the protein was loaded onto analytical scale CEX column. Figure 1 depicts the presence of different charge variant species present in mAb load prior to any preparative scale purification. A charge variant profile for mAb load prior to any preparative scale purification contained 29.8% acidic species, 50.6% main species and 19.6% basic species, as determined through analytical scale CEX-HPLC. Semi-preparative scale CEX was done afterwards to prepare samples for the AI-ML model calibration. A preparative scale CEX was run using Eshmuno CPX resin and the samples collected were used for the AI-ML model validation. Figures 2A-2B show the preparative scale CEX chromatograms during elution. Significant co-elution was observed between the acidic-main and main-basic species but limited co-elution between the acidic-basic species.

After semiprep scale purification of mAb, all the acidic, main, and basic fractions were pooled accordingly to obtain close to pure charge variant species. The pooled acidic content was found to be 97.4 % pure, main species was 81.9 % pure, and basic variant was 94.8 % pure. These pooled charge variants were mixed in different ratios to generate different charge variant contents at different concentrations.

Four machine learning frameworks were included to estimate the charge variants: Support vector regression (SVR), Random Forest (RF), Deep neural network (DNN), and Convolutional neural network (CNN)

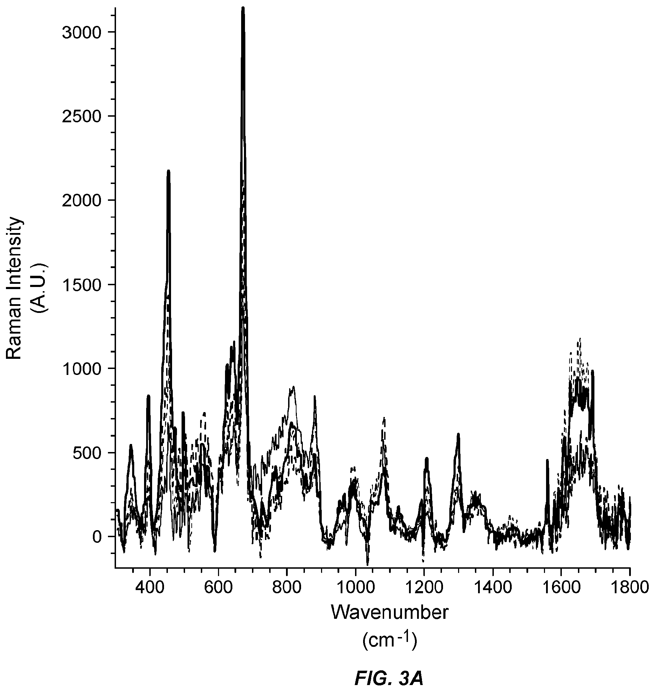

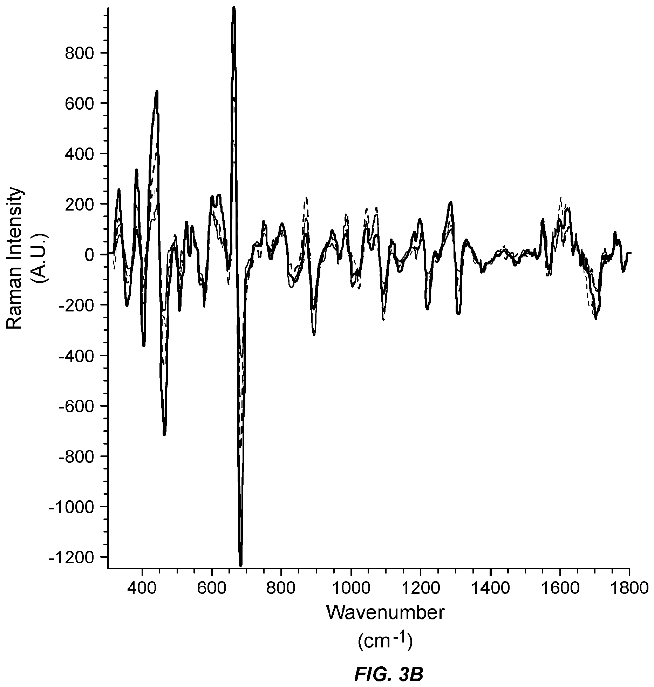

The four calibration models were fitted for the acidic species concentration, main species concentration, basic variant concentration and total mAb concentration in the region of 300-1800 cm⁻¹ of Raman spectra. Figures 3A-3B shows the spectra before and after pre-processing for samples with high acidic, high main, and high basic content.

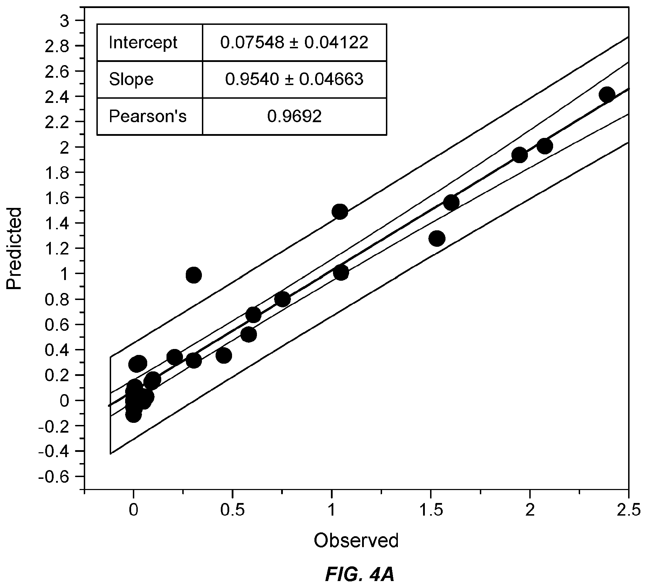

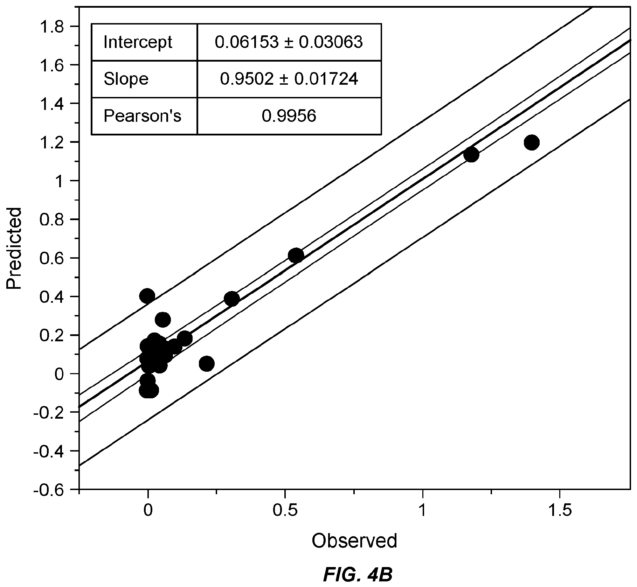

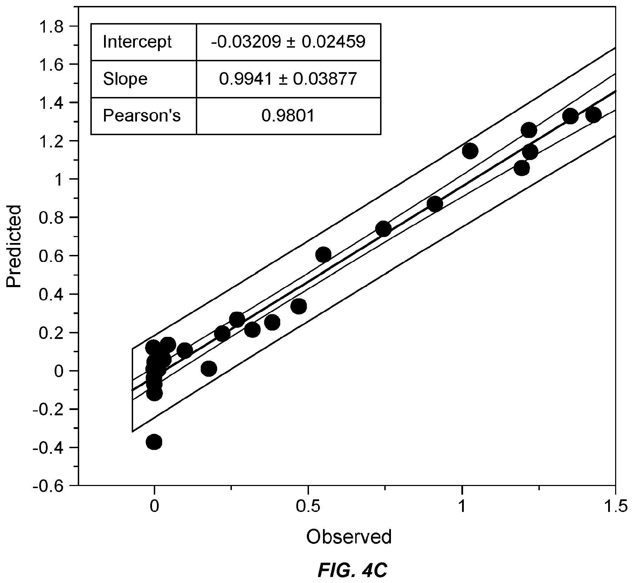

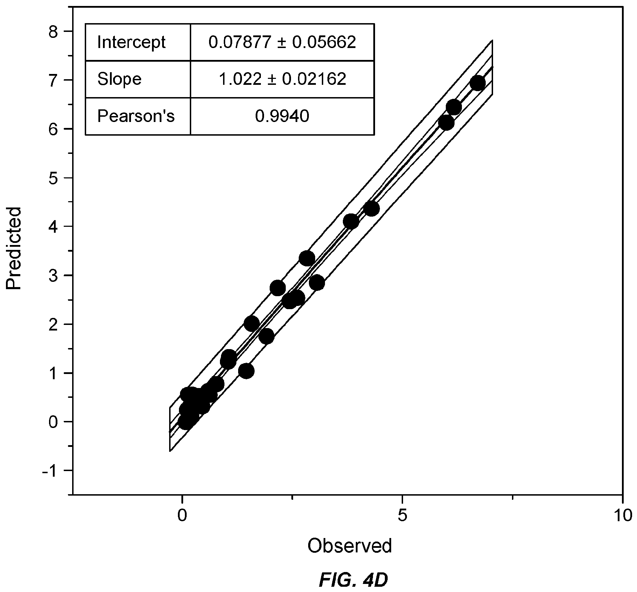

The four machine learning frameworks were compared and statistical indicators such as R², RMSE, MAE, MSE and Taylor diagram were employed to evaluate the model predictive performance. Figure 4A-4D depicts the scattered plots of SVR, RF, DNN, and CNN respectfully for different charge variants and total protein. According to the statistical values with represent to CNN architecture with data augmentation offered better performance than SVR, RF, and DNN models. The results of CNN architecture with represent to charge variants and Pearson's correlation coefficients of 0.9692, 0.9956, 0.9801, and 0.994 were obtained for acidic, main, basic, and total protein, respectively. Similarly, the Pearson's correlation coefficients were evaluated for SVR (0.7190 for acidic, 0.9872 for main, 0.7642 for basic, and 0.9711 for total protein), RF (0.7953 for acidic, 0.9901 for main, 0.8983 for basic, and 0.9836 for total protein), and DNN (0.9121 for acidic, 0.9918 for main, 0.9559 for basic, and 0.9901 for total protein).

The values related to R², RMSE, MAE, and MSE are recorded in Table 1 with respect to the four different models used to estimate acidic, main, basic charge variant, and total protein concentration. As indicated by the statistical values shown in Table 1, greater prediction accuracy was noticed with the model based on CNN in comparison with SVR, RF, and DNN based models. The highest R² values (0.9401, 0.9908, 0.9604, and 0.9881) and minimum RMSE values (0.1846, 0.1627, 0.1029, and 0.2483) were obtained for acidic, main, basic charge variants, and total protein concentration with respect to CNN architecture. However, in the DNN architecture, values of RMSE value increased by 9% and corresponding R² value is reduced approximately by 11%. It is evident from Table 1 that the CNN architecture surpassed all other state-of-the-art techniques such as SVR, RF, and DNN based models for acidic, main, basic species and total protein.

**Table 1. Statistical results of SVR, RF, DNN, and CNN models for prediction of acidic, main and basic charge variants.**

| **Charge variants** | **Architecture** | **R²** | **RMSE** | **MAE** | **MSE** |
|---|---|---|---|---|---|
| Acidic | SVR | 0.5092 | 0.5627 | 0.3401 | 0.2113 |
| | RF | 0.6253 | 0.4597 | 0.3251 | 0.3216 |
| | DNN | 0.8319 | 0.2964 | 0.1904 | 0.0879 |
| | **CNN** | **0.9401** | **0.1846** | **0.1097** | **0.0341** |
| Main | SVR | 0.9744 | 0.4667 | 0.2909 | 0.225 |
| | RF | 0.9798 | 0.3359 | 0.2275 | 0.117 |
| | DNN | 0.9826 | 0.241 | 0.1644 | 0.0587 |
| | **CNN** | **0.99083** | **0.1627** | **0.1212** | **0.027** |
| Basic | SVR | 0.5923 | 0.33379 | 0.2519 | 0.12 |
| | RF | 0.8108 | 0.2155 | 0.1636 | 0.0436 |
| | DNN | 0.9155 | 0.1418 | 0.1161 | 0.0215 |
| | **CNN** | **0.9604** | **0.1029** | **0.0754** | **0.0113** |
| Total | SVR | 0.9429 | 0.4596 | 0.3477 | 0.2112 |
| | RF | 0.9673 | 0.3475 | 0.2770 | 0.1207 |
| | DNN | 0.9802 | 0.2906 | 0.2109 | 0.0844 |
| | **CNN** | **0.9881** | **0.2483** | **0.2030** | **0.0616** |

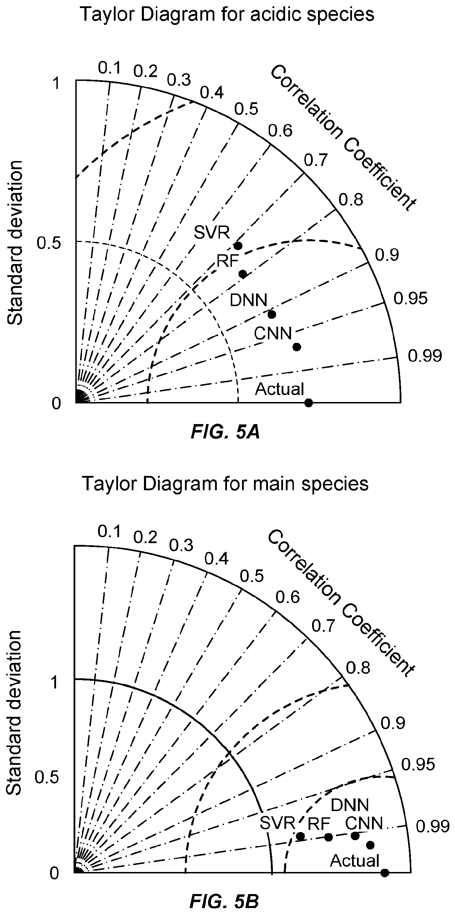

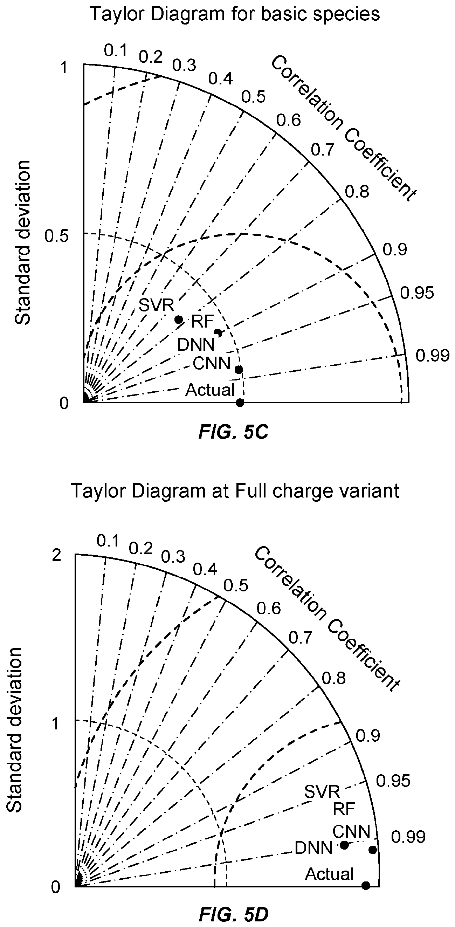

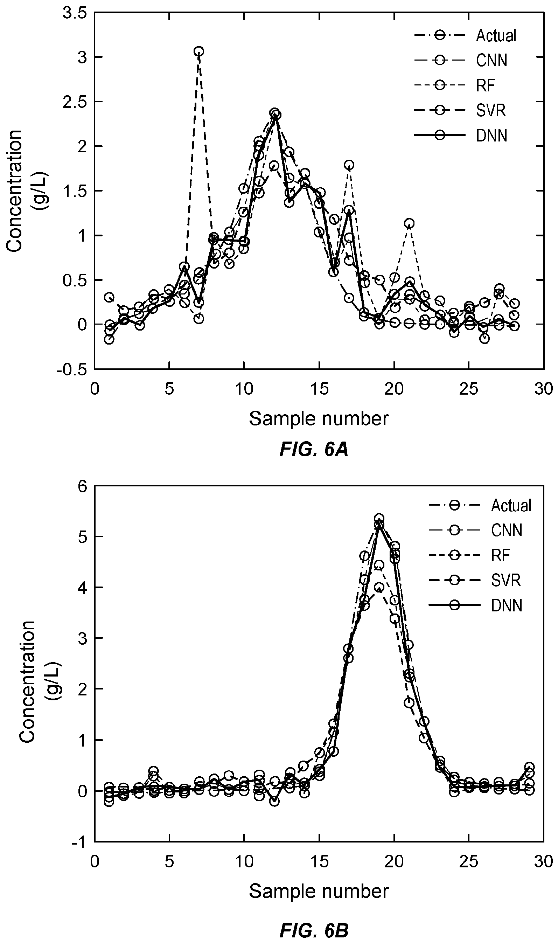

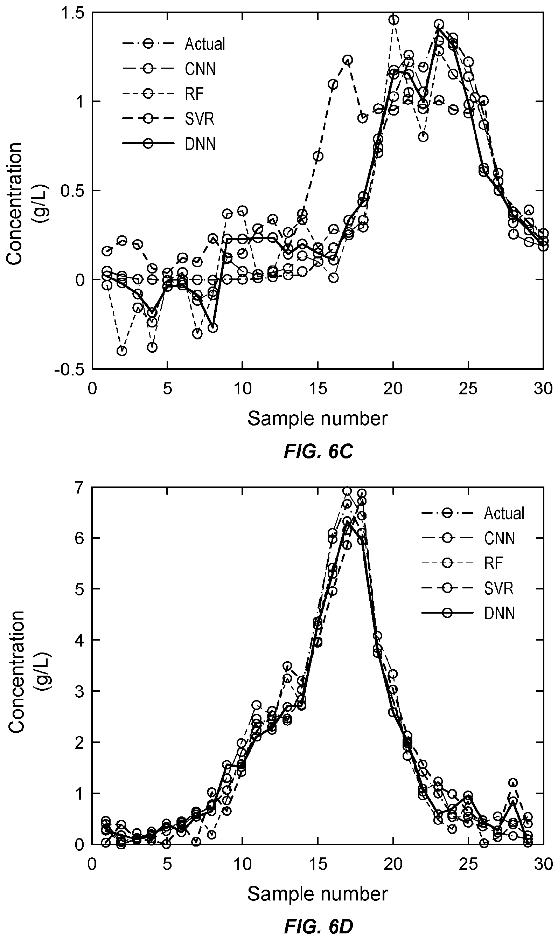

The CNN model is significantly better than other models, as indicated by the lower level of the scatter plot and an improved fit between the estimated data and the values seen in the 1:1 line in Figures 4A-4D. Even though for all the models, the assessment criteria were analyzed as shown in Figures 4A-4D and Table 1, the Taylor diagram (TD) was also used to compare the approaches used as described herein. The underlying principle behind the TD is to depict the closest prediction model with real related observations on a two-dimensional scale which includes correlation coefficient on the polar axis and standard deviation on the radial axis. Therefore, from Figure 5A-5D, it can be observed that the CNN model performed better than other state-of-the-art techniques. With the four AI-ML models, estimated values relating to charge variant concentrations have been plotted against the measured values for each charge variants and total protein as shown in Figure 6. Figures 6A-6D represent the actual and predicted values for different prediction models with respect to acidic, main, basic, and total protein concentrations.

### 2. Deploying Raman spectroscopy for real-time analysis of chromatography process material

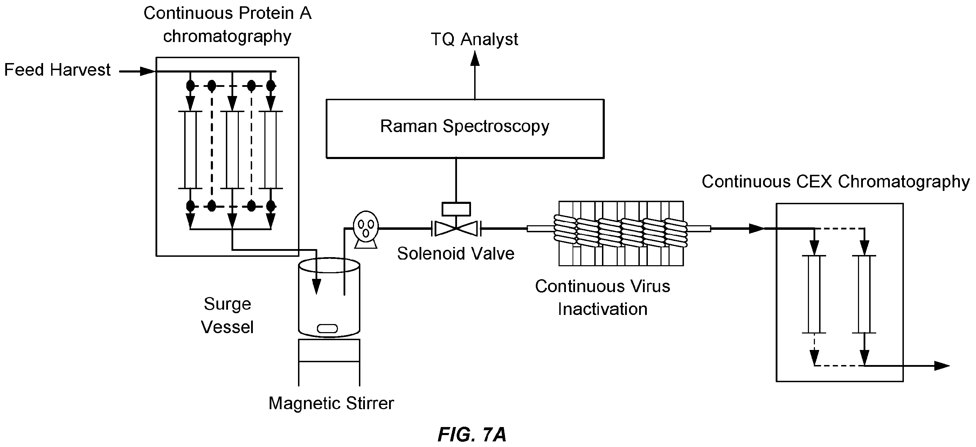

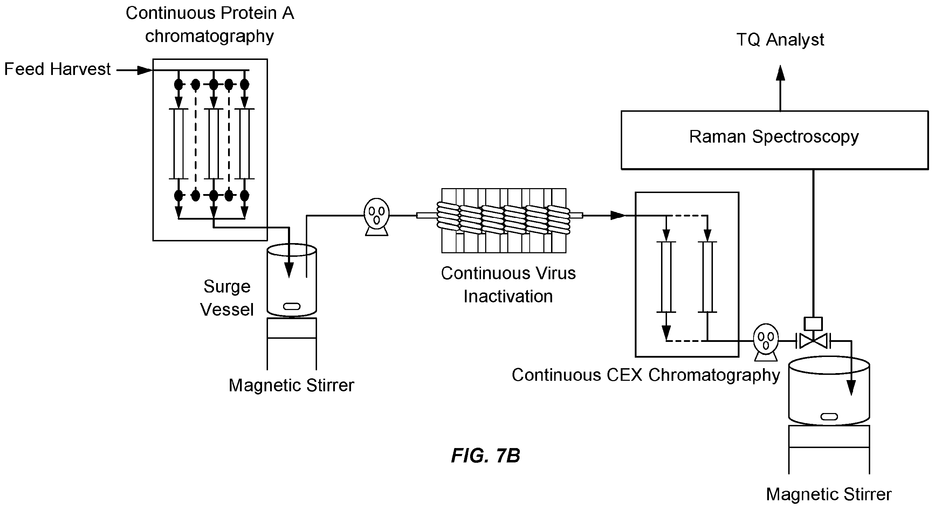

The experimental setup shown in Figurea 7A-7B was constructed for integrating the Raman spectrometer with preparative chromatography. The sampling location for the Raman samples can be in the feed tank for the CEX, i.e., the surge tank in which neutralized Protein A elute is stored post viral inactivation (Setup A in Figure 7A). During continuous chromatography of mAbs, Protein A purified mAb is collected in a surge tank and a peristaltic pump circulates a fixed amount of sample into 96 well plate from which Raman spectra is taken. After the spectra is taken, another peristaltic pump recirculates the sample from 96 well plate back to the surge tank. Both the pumps operate such that a 200µL sample is constantly maintained in the 96 well plate. The other option is to use a similar pump instrumentation at the outlet of the CEX column by bypassing a small stream of material from the CEX elution stream into the 96 well plate and then re-mixing it back into the CEX elution stream of surge vessel (Setup B in Figure 7B). Raman spectrophotometer was focused according to a 200 µl sample in 96 well plate, and thus the sampling approach is feasible from any desired location in the continuous process. For real-time analysis, the calibrated models were exported into a method file and then imported into a real-time spectrum collection and processing workflow. This workflow was started at the same time as CEX elution and automatically passed the real-time Raman spectrum as well as the corresponding stored background spectrum to the calibration model, reporting the numerical concentration measurement result into a time-stamped Excel array that could be accessed using a Python script and used as an input for control actions, as showcased in the next section.

### 3. Case studies for monitoring and control of charge variants in mAb purification

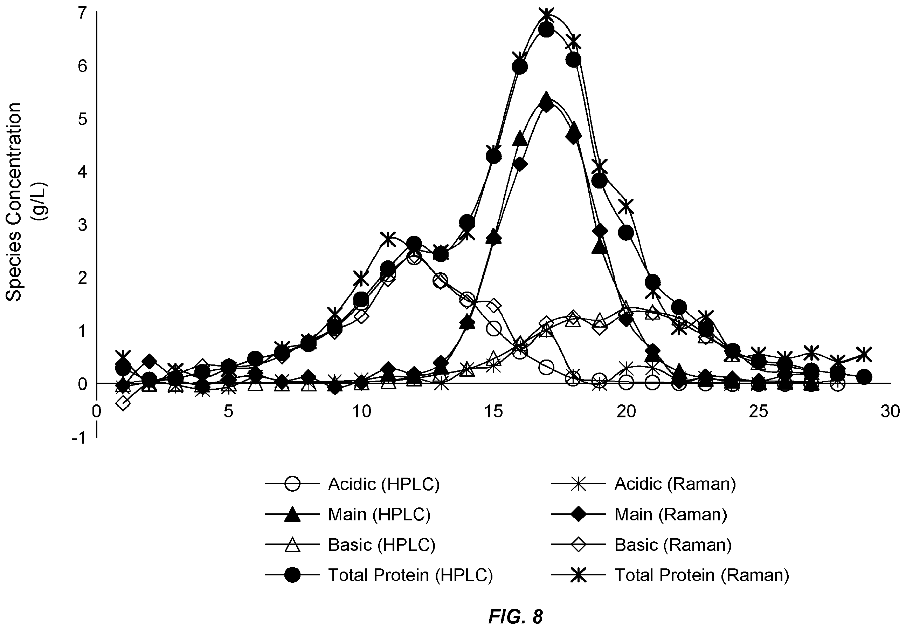

The monitoring tool was tested in CEX chromatography using an Eshmuno CPX packed column with elution gradient from 0-100% Buffer B in 20 CV and loading of 15 mg mAb/mL resin. Feed sample as well as elution fractions were also collected for offline analysis using analytical CEX HPLC. Figure 8 shows the results of the charge variant elution profiles as measured by the Raman spectrometer using CNN framework and compared to the analytical HPLC measurements. It is evident that the charge variant profiles are successfully tracked by the Raman spectrometer with one measurement every 200 seconds for acidic species, main species, basic species and total protein concentration. Average absolute error between all Raman and HPLC measurements was 0.15 g/L. Thus, this approach is an effective on-line PAT tool that can be integrated with both model-based and empirical control strategies for chromatography as published in the recent literature. The first approach is to use Raman to quantify the charge variants in the CEX chromatography load prior to loading, and run a mechanistic chromatography model for predicting the elution profile and adjusting the pooling criteria on a cycle-to-cycle basis. The other option is to monitor the eluting charge variants in real time and build an empirical model for triggering pooling control actions, an approach which can also be carried out using at-line HPLC rather than Raman spectroscopy as the monitoring tool.

Both of these approaches have pros and cons when deployed for continuous monitoring and control of charge variants. In the former case, the delay of 200 seconds is insignificant as the total elution time for CEX is typically 0.5-2 hours long. Thus, the Raman method can be used once per cycle in order to quantify the charge variant distribution in the feed material and adjust the pooling during the elution of that particular cycle. However, additional complexity is introduced because an additional model-based predictive tool is required to simulate the elution profile based on a given charge variant load, which requires calibration of several mechanistic parameters that depend on column size, resin type, elution gradient characteristics, and mAb binding isotherms. Thus, the approach is preferable if a robust mechanistic model has been developed and validated. On the other hand, using Raman to directly quantify the composition of the elution stream is a simpler approach, but the time delay of 200 seconds may be less desirable when trying to implement real-time pooling decisions, as a 3-minute delay can be a significant fraction of an elution block that may be about 30 minutes long.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred aspects of this invention are described herein, including the best mode known to the inventors for carrying out the invention. Variations of those preferred aspects may become apparent to those of ordinary skill in the art upon reading the foregoing description. The inventors expect skilled artisans to employ such variations as appropriate, and the inventors intend for the invention to be practiced otherwise than as specifically described herein. Moreover, any combination of the above-described elements in all possible variations thereof is encompassed by the invention unless otherwise indicated herein or otherwise clearly contradicted by context, and as long as such combination falls under the scope of the appended claims.

## Claims

1. A method for determining charge variants in monoclonal antibodies, the method comprising
(a) continuously passing a monoclonal antibody-containing fluid through a chromatography column, including sampling the monoclonal antibody-containing fluid before passing the monoclonal antibody-containing fluid through the chromatography column, and binding monoclonal antibodies in the monoclonal antibody-containing fluid to the chromatography column;
(b) eluting bound monoclonal antibodies from the chromatography column to provide eluted monoclonal antibody-containing fluid, and sampling the eluted monoclonal antibody-containing fluid;
(c) analyzing, via raman spectroscopy, samples of monoclonal antibody-containing fluid before passing the monoclonal antibody-containing fluid through the chromatography column, and samples of the eluted monoclonal antibody-containing fluid; and,
(d) quantifying charge variant distribution present in the sampled monoclonal antibody-containing fluid before passing the monoclonal antibody-containing fluid through the chromatography column.

2. The method of claim 1, including adjusting an elution rate of the monoclonal antibodies from the chromatography column based on the charge variant distribution quantified in (d).

3. The method of claim 1 or 2, wherein (d) includes quantifying charge variant distribution present in the sampled eluted monoclonal antibody-containing fluid.

## Patentansprüche

1. Verfahren zur Bestimmung von Ladungsvarianten in monoklonalen Antikörpern, wobei das Verfahren umfasst
(a) kontinuierliches Durchleiten eines monoklonale Antikörper aufweisenden Fluids durch eine Chromatographiesäule, einschließlich einer Probenahme des monoklonale Antikörper aufweisenden Fluids vor dem Durchleiten des monoklonale Antikörper aufweisenden Fluids durch die Chromatographiesäule, und Binden monoklonaler Antikörper in dem monoklonale Antikörper aufweisenden Fluid an die Chromatographiesäule;
(b) Eluieren gebundener monoklonaler Antikörper aus der Chromatographiesäule, um ein eluierte monoklonale Antikörper aufweisendes Fluid bereitzustellen, und eine Probenahme des eluierte monoklonale Antikörper aufweisenden Fluids;
(c) Analysieren von Proben des monoklonale Antikörper aufweisenden Fluids mittels Raman-Spektroskopie, vor dem Durchleiten des monoklonale Antikörper aufweisenden Fluids durch die Chromatographiesäule, und von Proben des eluierte monoklonale Antikörper aufweisenden Fluids; und,
(d) Quantifizieren einer Ladungsvariantenverteilung, die in dem entnommenen, monoklonale Antikörper aufweisenden Fluid vorhanden sind, vor dem Durchleiten des monoklonale Antikörper aufweisenden Fluids durch die Chromatographiesäule.

2. Verfahren nach Anspruch 1, einschließlich Anpassen einer Elutionsrate der monoklonalen Antikörper aus der Chromatographiesäule auf der Grundlage der in (d) quantifizierten Ladungsvariantenverteilung.

3. Verfahren nach Anspruch 1 oder 2, wobei (d) das Quantifizieren der in dem entnommenen, eluierte monoklonale Antikörper aufweisenden Fluid vorhandenen Ladungsvariantenverteilung einschließt.

## Revendications

1. Procédé de détermination de variantes de charge dans des anticorps monoclonaux, le procédé comprenant
(a) le passage continu d'un fluide contenant des anticorps monoclonaux à travers une colonne de chromatographie, y compris l'échantillonnage du fluide contenant des anticorps monoclonaux avant le passage du fluide contenant des anticorps monoclonaux à travers la colonne de chromatographie, et la liaison d'anticorps monoclonaux dans le fluide contenant des anticorps monoclonaux à la colonne de chromatographie ;
(b) l'élution d'anticorps monoclonaux liés à partir de la colonne de chromatographie pour fournir un fluide contenant des anticorps monoclonaux élué, et l'échantillonnage du fluide contenant des anticorps monoclonaux élué ;
(c) l'analyse, par spectroscopie Raman, d'échantillons de fluide contenant des anticorps monoclonaux avant le passage du fluide contenant des anticorps monoclonaux à travers la colonne de chromatographie, et d'échantillons du fluide contenant des anticorps monoclonaux élué ; et,
(d) la quantification de la distribution de variante de charge présente dans le fluide contenant des anticorps monoclonaux prélevé avant le passage du fluide contenant des anticorps monoclonaux à travers la colonne de chromatographie.

2. Procédé selon la revendication 1, incluant l'ajustement d'un taux d'élution des anticorps monoclonaux à partir de la colonne de chromatographie sur la base de la distribution de variante de charge quantifiée en (d).

3. Procédé selon la revendication 1 ou la revendication 2, dans lequel (d) inclut la quantification de la distribution de variante de charge présente dans le fluide contenant des anticorps monoclonaux élué prélevé.
